# EUROPÄISCHE PATENTANMELDUNG

(11) **EP 1 894 947 A1**
(43) Veröffentlichungstag der Anmeldung: **05.03.2008**
(21) Anmeldenummer: 07114894.4
(22) Anmeldetag: 24.08.2007
(51) Int. Cl.: C08F 8/10

(54) **Vulkanisierbare Zusammensetzung auf Basis von Ethylen-Vinylacetat Copolymeren, deren Herstellung und Verwendung zur Herstellung von Artikeln mit Gummielastomeren Eigenschaften**

(30) Priorität: 02.09.2006 DE 102006041464
(71) Anmelder: LANXESS Deutschland GmbH, 51369 Leverkusen (DE)
(72) Erfinder: Kelbch, Stefan, 53804 Much (DE); Varnhorn, Kay, 51375 Leverkusen (DE); Isenberg-Schulz, Olaf, 40764 Langenfeld (DE); Frenzel, Ulrich, 51379 Leverkusen (DE); Ismeier, Jürgen, 85661 Forstinning (DE)

(57) **Zusammenfassung**

Bereitgestellt wird eine vulkanisierbare Zusammensetzung auf Basis von Ethylen-Vinylacetat Copolymeren mit einem Vinylacetat-Gehalt von mindestens 45 Gew.% bezogen auf das Copolymer, die in Abwesenheit von Peroxiden vernetzt werden können. Diese Mischungen enthalten mindestens einen zinnorganischen Katalysator und einen speziellen Vernetzer. Beschrieben wird ferner ein Verfahren zur Herstellung dieser vulkanisierbaren Zusammensetzungen sowie deren Verwendung zur Herstellung von Artikeln mit gummielastomeren Eigenschaften.

## Beschreibung

Die Erfindung betrifft eine vulkanisierbare Zusammensetzung enthaltend ein Ethylen-Vinylacetat-Copolymer, einen zinnorganischen Katalysator und einen speziellen Vernetzer, ein Verfahren zur Herstellung dieser vulkanisierbaren Zusammensetzung sowie deren Verwendung zur Herstellung von Artikeln mit gummielastomeren Eigenschaften.

Die Vernetzung von Ethylen-Vinylacetat-Copolymeren (auch EVA genannt) unter Einsatz einer Transesterifizierungsreaktion ist bisher vor allem für thermoplastische Ethylen-Vinylacetat-Copolymere beschrieben worden, d.h. Copolymere mit einem vergleichsweise geringen Vinylacetat-Gehalt. Der Fokus liegt dabei v.a. auf den käuflich erhältlichen Ethylen-Vinylacetat-Copolymer Produkten, die z.B. 26-28 Gew.% Vinylacetat, 38-41 Gew.% bzw. 39-42 Gew.% Vinylacetat enthalten.

Aus Polymer Engineering and Science 32 (15), (1992), 998-1013 ist es bekannt, eine Transesterifizierung in Gegenwart von DBTO (Dibutylzinnoxid) als Katalysator, jedoch in Abwesenheit von Vernetzern durchzuführen, um ein Ethylen-Vinylacetat-Copolymer mit einem Vinylacetat-Gehalt von ca. 24 Gew.% mit Poly(ethylenacrylat-co-propylen) zu vernetzen. Die Netzbrücken der erhaltenen Vulkanisate bestehen nur aus -O-C(=O)- Gruppen.

**In** Polymer 1993, 34 (1), 124-131 wird die Vernetzung von Ethylen-Vinylacetat-Copolymeren mit Ethylen-Methylacrylat-Copolymeren in Gegenwart von Dibutylzinnoxid als Katalysator, jedoch in Abwesenheit von Vernetzern beschrieben. Als EVA-Copolymere werden solche mit einem Vinylacetat Gehalt von 28 Gew.% eingesetzt. Die Netzbrücken der erhaltenen vernetzten Copolymere bestehen somit ebenfalls nur aus "-O-C(=O)-" Gruppen.

In Macromol. Chem. 194 (1993) 665-675 ist eine Tra nsesterifizierung von EVA mit einem Vinylacetat Gehalt von 14 Gew.% mit 1-Octanol unter Einsatz von DBTO und DBTDL (Dibutylzinndilaureat) beschrieben. Andere ebenfalls eingesetzte Katalysatoren, wie z.B. Dibutylzinnsulfid (DBTS), Zn(OAc)₂ (Zinkacetatdihydrat) oder Tetrabutoxytitan (Ti(OBu)₄, führten nicht zur Transesterifizierung.

In J. of Applied Polymer Science 65 (1997) 2457-2469 werden Pfropfcopolymere auf Basis von Ethylen-Vinylacetat Copolymeren (EVA) mit einem Gehalt von 9 bzw. 28 Gew.% Vinylacetat sowie Polybutylenterephthalat (PBT) beschrieben, wobei unter Einsatz von Dibutylzinnoxid, jedoch in Abwesenheit von Vernetzern, eine Transesterifizierungsreaktion durchgeführt wird, um das erhaltene Pfropfcopolymer zur Erhöhung der Verträglichkeit in Blends der eigentlich unverträglichen Polymere EVA und PBT einzusetzen.

In J. of Applied Polymer Science 79 (2001), 1556-1562 wird die Transesterifizierungs-Vemetzung von Ethylen-Vinylacetat-Copolymeren mit einem Vinylacetat-Gehalt von 28 Gew.% unter Einsatz von Dimethylterephthalat (DMT) in Gegenwart der verschiedenen Katalysatoren Dibutylzinnoxid, Titantetrabutoxid, Zirkontetraethoxid und p-Toluolsulfonsäure untersucht. Während der Einsatz von DBTO zu einer Vernetzung führt, kann in Gegenwart von Titantetrabutoxid, Zirkontetraethoxid und p-Toluolsulfonsäure keinerlei Vernetzung des EVA Copolymers mit DMT beobachtet werden.

In Polymer 43 (2002), 6085-6092 wird ferner beschrieben, ein Ethylen-Vinylacetat Copolymer mit einem Vinylacetat-Gehalt von 28 Gew.% in Gegenwart von Dibutylzinnoxid als Katalysator und eines Alkoxysilans wie Tetramethoxy-, Tetraethoxy- oder Tetrapropoxysilan über eine Transesterifizierung zu vernetzen.

In Polym. Int. 53 (2004), 523-535 wird die Herstellung eines neue n thermoplastischen Vulkanisats ("TPV") auf Basis von Polypropylen als thermoplastischer Phase und einem Ethylen-Vinylacetat-Copolymer als Elastomer-Phase beschrieben, indem die Elastomer-Phase unter Einsatz von Tetrapropoxysilan (TPOS) als Vernetzer in Gegenwart von Dibutylzinnoxid (DBTO) dynamisch vulkanisiert wird. Das Ethylen-Vinylacetat Copolymer besitzt einen Vinylacetat-Gehalt von 26 bis 42 Gew.%.

In der EP-B-0 461 247 wird ein Verfahren zur Vernetzung von (Co)polymeren beschrieben, die Chlor, Ester, NH oder Carbonatgruppen umfassen, indem man diese bei 100 bis 300 °C in Abwesenheit von Lösungsmittel, Metallseife und Weichmacher mit speziell definierten Organometallalkoholaten auf der Basis von Zinn, Blei, Bismut oder Antimon umsetzt. Bei diesen Copolymeren kann es sich auch um Ethylen-Vinylacetat-Copolymere handeln.

Ethylen-Vinylacetat-Copolymere mit höherem Vinylacetat-Gehalt sind insbesondere für die Herstellung von gummielastomeren Artikeln von Bedeutung. Die Güte und Einsatzbereiche dieser gummielastomeren Artikel werden unter anderem erheblich von den Tieftemperatureigenschaften dieser Artikel beeinflusst. Für die Vernetzung dieser Ethylen-Vinylacetat-Copolymere mit höherem Vinylacetat-Gehalt werden bisher faktisch ausschließlich Peroxide als Vernetzer eingesetzt. Hieraus resultiert, dass derart vernetzte Ethylen-Vinylacetat Copolymere kurze Netzbrücken aufweisen und eine nicht immer hinreichend zufrieden stellende Dynamik sowie Tieftemperatur-Flexibilität. Zur Einstellung der Tieftemperatureigenschaften von Elastomeren allgemein werden üblicherweise Weichmacher und/oder Öle zugesetzt. Dieser Einsatz ist jedoch bei den Peroxid-vernetzten Ethylen-Vinylacetat-Copolymeren mit erheblichen Problemen verbunden: Vom Prinzip her verringern alle derartigen Weichmacher und/oder Öle die Effizienz der Peroxide, da eine nicht geringe Zahl der entstehenden Radikale im Öl/dem Weichmacher generiert werden und demzufolge nicht für das eigentlich gewünschte Cross - linking der Ethylen-Vinylacetat Copolymerketten zur Verfügung stehen (siehe W. Hoffmann; Rubber Technology Handbook, Carl Hanser Verlag, 2. (engl.) Auflage 1989, Kapitel "4.2.4.1 Peroxides" sowie Kapitel "4.5.2 Plasticizers and Process Aids"). Ferner können diese Öle/Weichmacher auch anderweitig mit dem Peroxid interagieren. Aromatische Öle haben den größten negativen Einfluss auf die Güte der Vernetzung, aber auch für naphthenische sowie paraffinische Öle werden unerwünschte Einflüsse beobachtet. Ähnliches gilt für die Weichmacher. Während beispielsweise Cumaron/Inden-Harze geeignete Weichmacher für Elastomer-Mischungen sind, die einer Schwefel-Vernetzung unterzogen werden, sind sie für eine Verwendung bei Peroxid-Vernetzung nicht geeignet. Jegliche Weichmacher, die über vinylische Doppelbindungen verfügen sind für eine Peroxid-Vernetzung schädlich.

Darüber hinaus weisen peroxidisch vernetzte Ethylen-Vinylacetat Copolymer - GummiMischungen - weitere Defizite auf, wie z.B. die relativ geringe Weiterreißfestigkeit bei hohen Temperaturen (hot tear).

Ausgehend vom Stand der Technik bestand die Aufgabe der vorliegenden Erfindung darin, ein neue, vulkanisierbare Zusammensetzung auf Basis elastomerer Ethylen-Vinylacetat Copolymere mit einem möglichst breiten Portfolio von Vernetzern sowie Katalysatoren bereitzustellen, die auch den Einsatz solcher Weichmacher ermöglicht, die als Peroxid-Fänger fungieren oder anderweitig die Effizienz der Peroxid Vernetzung herabsetzen. Auch die übrigen oben genannten Defizite peroxidisch vernetzter Ethylen-Vinylacetat Copolymer-Gummimischungen, wie z.B. die relativ geringe Weiterreißfestigkeit bei hohen Temperaturen (hot tear) sollten behoben werden.

Gelöst wird diese Aufgabe durch die erfindungsgemäßen vulkanisierbaren Zusammensetzungen, die nicht die Gegenwart von Peroxiden als Vernetzer erfordern, sondern unter Verwendung von Silanen oder Titanaten als Vernetzern funktionieren.

**Gegenstand der Erfindung** ist daher eine vulkanisierbare Zusammensetzung enthaltend
a) mindestens ein Copolymer auf Basis der Monomere Ethylen und Vinylacetat mit einem Vinylacetat Gehalt von mindestens 45 Gew.%, bezogen auf das Copolymer,
b) mindestens einen zinnorganischen Katalysator und
c) mindestens einen Vernetzer ausgewählt aus der Gruppe bestehend aus Silanen und Titanaten.

Durch diese neue vulkanisierbare Zusammensetzung, die einen zinnorganischen Katalysator und einen speziellen Vernetzer enthält, wird es möglich, ohne Einsatz von Peroxiden basierend auf einer Transesterifizierung wahlweise entweder eine Vernetzung oder aber zunächst eine Funktionalisierung und nachfolgende Vernetzung von Ethylen-Vinylacetat-Copolymeren mit mindestens 45 Gew.% Vinylacetat-Gehalt durchzuführen.

Im Rahmen dieser Anmeldung und Erfindung können alle genannten, allgemeinen oder in verschiedensten Vorzugsbereichen genannten Definitionen von Resten, Parametern oder Erläuterungen untereinander, also auch zwischen den jeweiligen Bereichen und Vorzugsbereichen in beliebiger Weise kombiniert werden.

### Ethylen-Vinylacetat-Copolymere

Als Ethylen-Vinylacetat-Copolymere (im Rahmen dieser Anmeldung auch als "Ethylen-Vinylacetat-Copolymere", "EVA" oder "EVM" bezeichnet) werden in den erfindungsgemäßen vulkanisierbaren Zusammensetzungen solche eingesetzt, die einen Gehalt von mindestens 45 Gew.% Vinylacetat , bevorzugt einen Vinylacetat-Gehalt im Bereich von 45 bis 93 Gew.% , besonders bevorzugt einen Vinylacetat-Gehalt im Bereich von 45 bis 90 Gew.%, ganz besonders bevorzugt einen Vinylacetat-Gehalt im Bereich von 45 bis 85 und insbesondere einen Vinylacetat-Gehalt im Bereich von 50 bis 80 Gew.%, bezogen auf das Copolymer, aufweisen.

Bei diesen Ethylen-Vinylacetat-Copolymeren handelt es sich um Kautschuke, die nach dem Fachmann geläufigen Methoden herstellbar oder aber käuflich erhältlich sind, z.B. in Form der Produkte der Marken Levapren8, Levamelt® oder Baymod® L der Lanxess Deutschland GmbH.

### Zinnorganische Katalysatoren

Als Zinnorganische Katalysatoren sind beispielsweise die folgenden Klassen geeignet:
- A: **Monoalkylzinn-Verbindungen**
- B: **Dialkylzinn-Verbindungen**
- C: **Trialkylzinn-Verbindungen**
- D: **Triarylzinn-Verbindungen**
- E: **Tetraalkylzinn-Verbindungen**
- **F**: **Zinn (II) Salze von Carbonsäuren, die nicht unter eine der vorgenannten Gruppen fallen.**

### A Monoalkylzinn-Verbindungen

In den **Monoalkylzinn-Verbindungen** der **Klasse A** steht Alkyl für einen geradkettigen oder verzweigten C₁-C₂₀-, bevorzugt C₁-C₈-Alkylrest, insbesondere handelt es sich um Monobutyl- oder Monooctylzinnverbindungen.

Speziell werden als **Monoalkylzinn-Verbindungen** der **Klasse A** beispielsweise eingesetzt:
1. **Monoalkylzinnoxide,** worin Alkyl für einen geradkettigen oder verzweigten C₁-C₂₀-Alkyl-Rest, bevorzugt für einen geradkettigen oder verzweigten C₁-C₈-Alkylrest steht.
   Bevorzugt ist Monobutylzinnoxid ("MBTO"; (C₄H₉)SnOOH) sowie Monooctylzinnoxid ((C₈H₁₇)SnOOH).
2. **Monoalkylzinntricarboxylate** der Formel

   (Alkyl)Sn(OOC-Alkyl)₃

   worin die Alkyl-Reste gleich oder verschieden sind und für einen geradkettigen oder verzweigten C₁-C₂₀-Alkylrest, bevorzugt für einen geradkettigen oder verzweigten C₁-C⁸-Alkylrest stehen.
   Bevorzugt ist Butylzinn-tris-(2-ethylhexanoat).
3. **Monoalkyldihydroxychloride** der Formel

   (Alkyl)Sn(OH)₂Hal

   worin Alkyl für einen geradkettigen oder verzweigten C₁-C₂₀-Alkyl-Rest, bevorzugt für einen geradkettigen oder verzweigten C₁-C₈-Alkylrest steht und Hal für Halogen.
   Bevorzugt ist Monobutylzinndihydroxichlorid ((C₄H₉)Sn(OH)₂Cl).

### B Dialkylzinn-Verbindungen

In den **Dialkylzinn-Verbindungen** der **Klasse B** steht Alkyl für einen geradkettigen oder verzweigten C₁-C₂₀-Alkylrest, bevorzugt für einen geradkettigen oder verzweigten C₁-C₈-Alkylrest, insbesondere handelt es sich um Dibutyl- oder Dioctylzinnverbindungen.

Speziell werden als **Dialkylzinn-Verbindungen der Klasse B** beispielsweise eingesetzt:
1. **Dialkylzinnoxide,** worin Alkyl für einen geradkettigen oder verzweigten C₁-C₂₀-Alkylrest, bevorzugt einen geradkettigen oder verzweigten C₁-C₈-Alkylrest steht.
   Bevorzugt sind Dibutylzinnoxid ("DBTO"; (C₄H₉)₂SnO) und Dioctylzinnoxid ("DOTO"; (C₈H₁₇)₂SnO).
2. **Dialkylzinnsulfide**, worin Alkyl für einen geradkettigen oder verzweigten C₁-C₂₀-Alkylrest, bevorzugt einen geradkettigen oder verzweigten C₁-C₈-Alkylrest steht.
   Bevorzugt ist Dibutylzinnsulfid ((C₄H₉)SnS).
3. **Dialkylzinndicarboxylate** der Formel

   (Alkyl)₂Sn(OOC-Alkyl)₂

   worin die Alkyl-Reste gleich oder verschieden sind und für einen geradkettigen oder verzweigten C₁-C₂₀-Alkylrest, bevorzugt für einen geradkettigen oder verzweigten C₁-C₈-Alkylrest stehen.
   Bevorzugt sind Dibutylzinn-diacetat ((C₄H₉)₂Sn(OOCCH₃)₂), Dibutylzinn-dilaureat ("DBTL"; (C₄H₉)₂Sn(OOCC₁₁H₂₃)₂), Dioctylzinn-diacetat ((C₈H₁₇)₂Sn(OOCCH₃)₂), Dioctylzinn di-(2-ethylhexanoat) ((C₈H₁₇)₂Sn(OOCC₇H₁₅)₂), Dioctylzinn-dilaureat ("DOTL" (C₈H₁₇)₂Sn(OOCC₁₁H₂₃)₂) und Dibutylzinn-dineodecanoat (C₄H₉)₂Sn(OOCC₉H₁₉)₂.
4. **Dialkylzinndicarboxylate** der Formel

   (Alkyl)₂Sn(OOC-R-COO)

   worin die Alkyl-Reste gleich oder verschieden sind und für einen geradkettigen oder verzweigten C₁-C₂₀-Alkylrest, bevorzugt für einen geradkettigen oder verzweigten C₁-C₈-Alkylrest stehen und R für einen Alkylen-Rest steht, bevorzugt für einen C₁-C₂₄-Alkylen-Rest, der gegebenenfalls auch eine oder mehrere Doppelbindungen aufweisen kann.
   Bevorzugt sind Dibutylzinnmaleat ((C₄H₉)₂Sn(OOCCH=CHCOO), Dibutylzinn bis-(octylmaleinat) und Dibutylzinn bis-(octylmaleat) ((C₄H₉)₂Sn(C₂₄H₃₈O₂.
5. **Dialkylzinndihalogenide** der Formel

   (Alkyl)₂Sn(Hal)₂

   worin die Alkyl-Reste gleich oder verschieden sind und für einen geradkettigen oder verzweigten C₁-C₂₀-Alkylrest, bevorzugt für einen geradkettigen oder verzweigten C₁-C₈-Alkylrest stehen und Hal Halogen, bevorzugt Chlor oder Brom, bedeutet. Bevorzugt ist Dibutylzinndichlorid.

### C Trialkylzinn-Verbindungen

In den Trialkylzinn-Verbindungen der **Klasse C** steht Alkyl für einen geradkettigen oder verzweigten C₁-C₂₀-Alkylrest, bevorzugt für einen geradkettigen oder verzweigten C₁-C₈-Alkylrest, insbesondere handelt es sich um Tributyl- oder Trioctylzinnverbindungen.

### D Triarylzinn-Verbindungen

In den Triarylzinn-Verbindungen der **Klasse D** steht Aryl für einen aromatischen C₅-C₂₄ Rest, bei dem gegebenenfalls ein oder mehrere der Ring-Kohlenstoffatome durch Heteroatome, bevorzugt Stickstoff, Sauerstoff oder Schwefel ersetzt sein können.

Bevorzugt sind Triphenylzinnverbindungen.

### E Tetraalkylzinn-Verbindungen

In den **Tetraalkylzinn-Verbindungen** der **Klasse E** steht Alkyl für einen geradkettigen oder verzweigten C₁-C₂₀-Alkylrest, bevorzugt für einen geradkettigen oder verzweigten C₁-C₈-Alkylrest, insbesondere handelt es sich um Tetrabutyl- oder Tetraoctylzinnverbindungen. Bevorzugt ist Tetrabutylzinn sowie Tetraoctylzinn.

### F Zinn (II) Salze von Carbonsäuren, die nicht unter eine der vorgenannten Gruppen fallen

Als Zinn (II) Salze von Carbonsäuren werden bevorzugt Zinn (II) Salze von C₂-C₂₀ Carbonsäuren, bevorzugt C₂-C₁₄ Carbonsäuren eingesetzt, bevorzugt Zinn (II)-acetat, Zinn (II)-octoat und Zinn (II)-ethylhexanoat in Frage.

### Vernetzer:

Die Vernetzer-Komponente c) in der erfindungsgemäßen vulkanisierbaren Zusammensetzung wird aus der Gruppe bestehend aus Silanen und Titanaten ausgewählt.

### Silane:

Eingesetzt werden beispielsweise **Silane der allgemeinen Formel (I),** 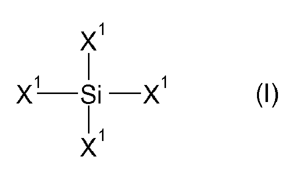 worin
- X¹: gleich oder verschieden sind und für eine Gruppe der Formel O-(R¹-O)ₘ-R² stehen, worin m eine ganze Zahl von 0 bis 20 ist, R¹ einen C₁-C₂₀-Alkylenrest, bevorzugt einen C₁-C₈-Alkylenrest darstellt und R² für einen geradkettigen oder verzweigten C₁-C₂₀-, bevorzugt einen geradkettigen oder verzweigten C₁-C₈-Alkylrest steht.

Bevorzugt werden **Silane der allgemeinen Formel (I)** eingesetzt, worin m gleich 0 ist und R² gleich oder verschieden sind und einen geradkettigen oder verzweigten C₁-C₈-, besonders bevorzugt C₁-C₅-Alkylrest darstellen.

Bevorzugt werden ferner **Silane der allgemeinen Formel (I)** eingesetzt, worin m gleich 1 ist, R¹ gleich oder verschieden sind und einen C₁-C₈-Alkylenrest, besonders bevorzugt einen C₁-C₅-Alkylenrest bedeuten und R² gleich oder verschieden sind und einen geradkettigen oder verzweigten C₁-C₈-Alkylrest, besonders bevorzugt C₁-C₅-Alkylrest darstellen.

Insbesondere werden als **Silane der allgemeinen Formel (I)** Tetramethoxysilan, Tetraethoxysilan, Tetra-n-propoxysilan, Tetra-n-butoxysilan und Tetrakis (2-butoxyethoxy)silan eingesetzt.

Eingesetzt werden ferner **Silane der allgemeinen Formel (II),** 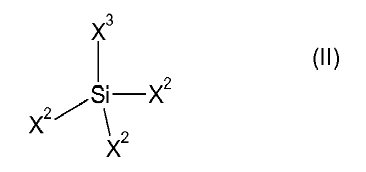 worin
- x²: gleich oder verschieden sind und
einen geradkettigen oder verzweigten C₁-C₂₀-, bevorzugt C₁-C₈-, besonders bevorzugt C₁-C₅-Alkylrest,
einen C₆-C₁₄-Arylrest, oder
eine Gruppe der Formel O-(R¹-O)ₘ R² darstellen, worin
m eine ganze Zahl von 0 bis 20 ist,
R¹ einen C₁-C₂₀-, bevorzugt C₁-C₈-, besonders bevorzugt C₁-C₅-Alkylenrest und
R² einen geradkettigen oder verzweigten C₁-C₂₀-, bevorzugt C₁-C₈-, besonders bevorzugt C₁-C₅-Alkylrest darstellt, wobei mindestens ein Rest X² für eine Gruppe der Formel O-(R¹-O)ₘ-R² steht,
- X³: einen Rest -(CH₂)ₙ-R³ bedeutet, worin
n eine ganze Zahl von 0 bis 16, bevorzugt von 0 bis 8, besonders bevorzugt 0, 1, 2 oder 3 ist, wobei die Methylengruppen CH₂ der Alkylenkette (CH₂)ₙ auch durch einen gegebenenfalls substituierten aromatischen Rest, bevorzugt Phenyl unterbrochen sein können, und
R³ Wasserstoff, einen geradkettigen oder verzweigten C₁-C₂₀-, bevorzugt C₁-C₈-, besonders bevorzugt C₁-C₅-Alkylrest, OH, Halogen, bevorzugt Fluor, Chlor, Brom oder Iod, NR⁴₂, wobei R⁴ gleich oder verschieden sind und für Wasserstoff, geradkettiges oder verzweigtes C₁-C₂₀-, bevorzugt C₁-C₈-, besonders bevorzugt C₁-C₅-Alkyl, C₃-C₈-Cycloalkyl, bevorzugt Cyclohexyl, oder einen C₆-C₂₄-, bevorzugt C₆-C₁₄-Arylrest steht, -NHCH₂CH₂NH₂, -SH,-NCO, Carbamat, Acrylat, Vinyl (-CH=CH₂), Methacrylat, Glycidoxy, COOR⁴, P(R⁴)₃, wobei R⁴ gleich oder verschieden sind und die bereits genannten Bedeutungen besitzen kann, oder R³ einen Rest der allgemeinen Formel (III) darstellt, 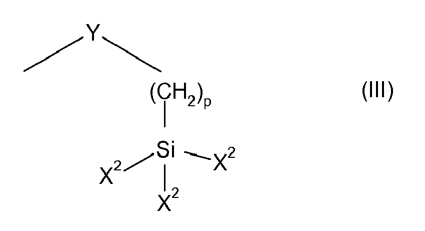 worin
X² den Bedeutungsumfang hat wie in der allgemeinen Formel (II)
p den Bedeutungsumfang von n in der allgemeinen Formel (II) hat und
Y für NR⁵ steht, wobei R⁵ Wasserstoff oder einen geradkettigen oder verzweigten C₁-C₂₀-, bevorzugt C₁-C₈-, besonders bevorzugt C₁-C₅-Alkylrest darstellt, oder für C(R⁵)₂ steht, wobei R⁵ gleich oder verschieden ist und die zuvor genannten Bedeutungen besitzen kann, oder
- X³: für einen Rest -NR⁵-(CH₂)ᵣ-NR⁵-R⁶ steht, wobei R⁵ die gleichen Bedeutungen besitzen kann wie zuvor für Formel (III) genannt, r eine Zahl von 1 bis 10, bevorzugt 2 bis 8 ist und R⁶ den Rest -Si(X²)₃ darstellt, wobei X² gleich oder verschieden sind und die zuvor für Formel (II) genannten Bedeutungen besitzen können.

**Bevorzugt werden Silane der allgemeinen Formel (II)** eingesetzt, bei denen
- X²: gleich oder verschieden sind und für eine Gruppe der Formel O-(R¹-O)ₘ-R² stehen, worin
m eine ganze Zahl von 0 bis 20, bevorzugt 0 bis 10 ist,
R¹ einen C₁-C₂₀-, bevorzugt C₁-C₈-, besonders bevorzugt C₁-C₅-Alkylenrest und
R² einen geradkettigen oder verzweigten C₁-C₂₀-, bevorzugt C₁-C₈-, besonders bevorzugt C₁-C₅-Alkylrest darstellt, und
- X³: einen Rest -(CH₂)ₙ-R³ bedeutet, worin
n eine ganze Zahl von 0 bis 16, bevorzugt von 0 bis 8, besonders bevorzugt 0, 1, 2 oder 3 ist, wobei die Methylengruppen CH₂ der Alkylenkette (CH₂)ₙ auch durch einen gegebenenfalls substituierten aromatischen Rest, bevorzugt Phenyl unterbrochen sein können, und
R³ Wasserstoff, einen geradkettigen oder verzweigten C₁-C₂₀-, bevorzugt C₁-C₈-, besonders bevorzugt C₁-C₅-Alkylrest, OH, Halogen, bevorzugt Fluor, Chlor, Brom oder Iod, NR⁴₂ wobei R⁴ gleich oder verschieden sind und für Wasserstoff, geradkettiges oder verzweigtes C₁-C₂₀-, bevorzugt C₁-C₈-, besonders bevorzugt C₁-C₅-Alkyl, C₃-C₈-Cycloalkyl, bevorzugt Cyclohexyl, oder einen C₆-C₂₄-, bevorzugt C₆-C₁₄-Arylrest steht, -NHCH₂CH₂NH₂, -SH,-NCO, Carbamat, Acrylat, Vinyl (-CH=CH₂), Methacrylat, Glycidoxy, COOR⁴, P(R⁴)₃, wobei R⁴ gleich oder verschieden sind und die bereits genannten Bedeutungen besitzen kann.

**Bevorzugt werden ferner Silane der allgemeinen Formel (II)** eingesetzt, worin
- X²: gleich oder verschieden sind und
einen geradkettigen oder verzweigten C₁-C₂₀-, bevorzugt C₁-C₈, besonders bevorzugt C₁-C₅-Alkylrest,
einen C₆-C₁₄-Arylrest, oder
eine Gruppe der Formel O-(R¹-O)ₘ-R² darstellen, worin
m eine ganze Zahl von 0 bis 20 ist,
R¹ einen C₁-C₂₀-, bevorzugt C₁-C₈-, besonders bevorzugt C₁-C₅-Alkylenrest und
R² einen geradkettigen oder verzweigten C₁-C₂₀-, bevorzugt C₁-C₈-, besonders bevorzugt C₁-C₅-Alkylrest darstellt, wobei mindestens ein Rest X² für eine Gruppe der Formel O-(R¹-O)ₘ-R² steht, und
- X³: einen Rest -(CH₂)ₙ-R³ bedeutet, worin
n eine ganze Zahl von 0 bis 16, bevorzugt von 0 bis 8, besonders bevorzugt 0, 1, 2 oder 3 ist, wobei die Methylengruppen CH₂ der Alkylenkette (CH₂)ₙ auch durch einen gegebenenfalls substituierten aromatischen Rest, bevorzugt Phenyl unterbrochen sein können, und
R³ für eine Gruppe der allgemeinen Formel (III) steht, 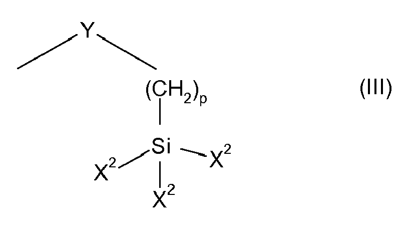 worin
x² den Bedeutungsumfang hat wie in der allgemeinen Formel (II)
p den Bedeutungsumfang von n in der allgemeinen Formel (II) hat und
Y für NR⁵ steht, wobei R⁵ Wasserstoff oder einen geradkettigen oder verzweigten C₁-C₂₀, bevorzugt C₁-C₈, besonders bevorzugt C₁-C₅-Alkylrest darstellt, oder für C(R⁵)₂ steht, wobei R⁵ gleich oder verschieden ist und die zuvor genannten Bedeutungen besitzen kann,

### Als spezielle Silane der allgemeinen Formel (II) werden besonders bevorzugt eingesetzt:

Diethoxydimethylsilan, Trimethoxymethylsilan, Trimethoxy-n-propylsilan, n-Hexadecyltrimethoxysilan, Triethoxy-n-propylsilan, Triethoxy-n-octylsilan, Triethoxy-n-hexadecylsilan, Trimethoxyvinylsilan, Triethoxyvinylsilan, (3-Methacryloxypropyl) trimethoxysilan ((CH₃O)₃Si((CH₂)₃-O-C(=O)-C(CH₃)=CH₂), Tris(2-methoxyethoxy)vinyl-silan, 3-Aminopropyltriethoxysilan, Ethylen-bis(triethoxysilan), 1, 8 -Bis (triethoxysilyl) octan, Bis(trimethoxysilylpropyl)amin, Bis(trimethoxysilylpropyl)ethylen-diamin, Diethoxy-methylphenylsilan, Bis(methyldiethoxysilylpropyl)amin, Chloromethylmethyldiethoxysilan, N-Cyclohexylaminomethylmethyldiethoxysilan und 3 -(Trimethoxysilyl)propylethylendiamin.

Eingesetzt werden ferner **Silane der allgemeinen Formel IV,** 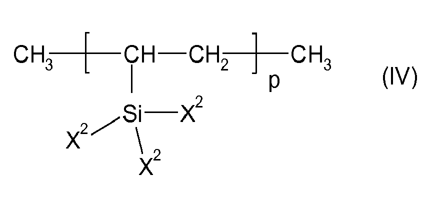 worin
- x²: gleich oder verschieden sind und die gleichen allgemeinen, bevorzugten und besonders bevorzugten Bedeutungen besitzen können wie in der allgemeinen Formel (II) und
- n: eine ganze Zahl von 2 bis 5000 ist, bevorzugt von 2 bis 500.

Bevorzugt sind die Reste X² in der allgemeinen Formel (IV) gleich und stehen für eine Gruppe der Formel O-(R¹-O)ₘ-R², worin
- m: eine ganze Zahl von 0 bis 20 ist,
- R¹: einen C₁-C₂₀-, bevorzugt C₁-C₈-, besonders bevorzugt C₁-C₅-Alkylenrest und
- R²: einen geradkettigen oder verzweigten C₁-C₂₀-, bevorzugt C₁-C₈-, besonders bevorzugt C₁-C₅-Alkylrest darstellt.

### Titanate:

Als Titanate werden in den erfindungsgemäßen vulkanisierbaren Zusammensetzungen solche der folgenden Formel (V) eingesetzt,

(X⁴O)ₛ-Ti-(OX⁵)₄₋ₛ (V)

wobei
- s: 0,1,2, 3 oder 4 ist,
- X⁴: gleich oder verschieden sind und einen geradkettigen oder verzweigten C₁-C₂₀, bevorzugt C₁-C₈-, besonders bevorzugt C₁-C₅-Alkylrest darstellen, insbesondere Ethyl, Propyl oder Butyl, und
- X⁵: gleich oder verschieden sind und eine organofunktionelle Gruppe darstellen, bevorzugt Phosphat, Benzolsulfonat, Phenolat, Amino, Carboxy, Ester oder Salze davon.

Im Rest X⁴ können einzelne Methylengruppen im Alkylrest auch durch eine Gruppierung -O- und/oder -N(H)- ersetzt sein, und/oder die endständige(n) Methylgruppe(n) im Alkylrest kann durch -NH₂ ersetzt sein.

Als Titanate werden bevorzugt eingesetzt: Tetra(ethyl)titanat, Tetra(n-propyl)titanat, Tetra(isopropyl)titanat, Tetra(n-butyl)titanat, Tetra(n-butyl,iso-propyl) titanat, Tetra(isobutyl)titanat, Tetra(tert.butyl)titanat, Tetra(isooctyl)titanat und Titan(IV) 2-ethylhexoxid.

Einsetzbar ist auch Isopropyl-tris(N-aminoethyl-aminoethyl) titanat der folgenden Struktur

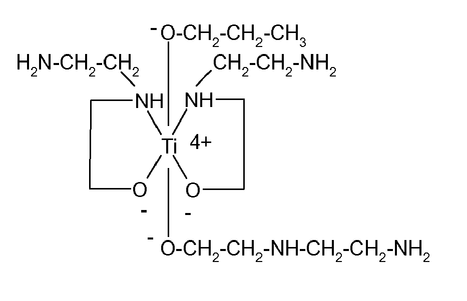

### Angaben zu den Mengen des Vernetzers c) bzw. des zinnorganischen Katalysators b):

Der Vernetzer wird in der Regel in einer Menge von 0,1 bis 25 Gewichtsteilen, bevorzugt in einer Menge von 0,5 bis 15 Gewichtsteilen und besonders bevorzugt in einer Menge von 1 bis 10 Gewichtsteilen, bezogen auf 100 Gewichtsteile des EVA, eingesetzt.

Der zinnorganische Katalysator wird in der Regel in einer Menge von 0,01 bis 5 Gewichtsteilen, bevorzugt in einer Menge von 0,1 bis 3 Gewichtsteilen und besonders bevorzugt in einer Menge von 0,3 bis 1,5 Gewichtsteilen, bezogen auf 100 Gewichtsteile des EVA, eingesetzt.

### Additive:

Neben den Komponenten a), b) und c) können in der erfindungsgemäßen vulkanisierbaren Zusammensetzung optional noch übliche Polymeradditive zugegen sein. Zu diesen Polymeradditiven zählen z.B.
**•** Füllstoffe,
**•** Alterungsschutzmittel,
**•** Weichmacher,
**•** Verarbeitungshilfsmittel wie Formtrennmittel.

Als **Füllstoffe** werden b eispielsweise Ruß, Kieselsäure, Bariumsulfat, Titandioxid, Zinkoxid, Calciumoxid, Calciumcarbonat, Magnesiumoxid, Aluminiumoxid, Aluminiumhydroxid, Eisenoxid, Diatomeenerde oder Silikate eingesetzt.

Die Füllstoffe werden üblicherweise in einer Menge von 5 - 300 Gewichtsteilen pro 100 Gewichtsteile EVA eingesetzt.

Als Alterungsschutzmittel können alle dem Fachmann bekannten Alterungsschutzmittel eingesetzt werden, insbesondere und vorteilhafterweise auch solche, die bei einer Peroxid-Vernetzung von EVA ansonsten nicht in Frage kommen. Eingesetzt werden können beispielsweise oligomerisiertes 2,2,4-Trimethyl-1,2-dihydrochinolin (TMQ), styrolisiertes Diphenylamin (DDA), octyliertes Diphenylamin (OCD) oder Zinksalz von 4- und 5-Methylmercaptobenzimidazol (ZMB2). Daneben können auch die bekannten phenolischen Alterungsschutzmittel eingesetzt werden, wie sterisch gehinderte Phenole bzw. Alterungsschutzmittel auf Basis von Phenylendiamin. Es können auch Kombinationen der genannten Alterungsschutzmittel eingesetzt werden.

Alterungsschutzmittel werden üblicherweise in einer Menge von 0,1 bis 20 Gewichtsteilen, bevorzugt 0,1 bis 5, besonders bevorzugt 0,3 bis 3 Gewichtsteilen pro 100 Gewichtsteile EVA eingesetzt.

Als **Weichmacher** werden zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden.

Die Weichmacher werden üblicherweise in einer Menge von 0,1 bis 50 Gewichtsteilen pro 100 Gewichtsteile EVA eingesetzt.

Als **Formtrennmittel** kommen beispielsweise in Betracht: Gesättigte oder teilweise ungesättigte Fett- und Ölsäuren oder deren Derivate (in Form von Fettsäureestern, Fettsäuresalzen, Fettalkoholen oder Fettsäureamiden), weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von 0,2 bis 10 Gewichtsteilen, bevorzugt 0,5 bis 5 Gewichtsteilen, bezogen auf 100 Gewichtsteile EVA eingesetzt.

**Gegenstand der Erfindung** ist ferner die Herstellung der vulkanisierbaren Zusammensetzung, indem man mindestens ein Copolymer auf Basis der Monomere Ethylen und Vinylacetat mit einem Vinylacetat Gehalt von mindestens 45 Gew.%, bezogen auf das Copolymer, mindestens einen zinnorganische n Katalysator und mindestens einen Vernetzer ausgewählt aus der Gruppe bestehend aus Silanen und Titanaten miteinander vermischt, wobei die Mischtemperatur so gewählt wird, dass noch keine Vernetzung der Ethylen-Vinylacetat-Copolymere während dieses Mischvorgangs eintritt. Entweder werden alle Komponenten gleichzeitig miteinander gemischt, oder es werden zunächst alle Komponenten außer dem Vernetzer gemischt und der Vernetzer erst nachgeschaltet zugegeben.

Das Mischen erfolgt in dem Fachmann bekannten Mischapparaturen und -aggregaten wie Innenmischern (tangentiale oder ineinander greifende Rotoren), Walzen, Knetern oder Mischextrudern.

### Beschreibung der Vernetzung:

Bei der Vernetzung werden - durch die organische Zinnverbindung katalysiert - über den Vernetzer in Form des Silans oder Titanats zwei oder mehr Ethylen-Vinylacetat-Polymerketten über mindestens zwei Transesterifizierungsreaktion en chemisch miteinander verbunden. Diese Verbindung wird auch als Netzstelle bezeichnet.

Werden beispielsweise Silane der allgemeinen Formel (II) eingesetzt, so wird zunächst in einer ersten Transesterifizierungsreaktion das Silan über die Gruppe der Formel -O-(R¹-O)ₘ-R² auf die Ethylen-Vinylacetat-Copolymere aufgepfropft und dann in einer zweiten Transesterifizierungsreaktion z.B. über eine weitere funktionelle Gruppe im Rest X² oder X³ an weitere Ethylen-Vinylacetat-Copolymerketten angebunden, womit eine Vernetzung erreicht wird.

Die Vernetzung der Ethylen-Vinylacetat-Copolymere bzw. das Aufpfropfen des Silans oder Titanats auf die Ethylen-Vinylacetat-Copolymere wird üblicherweise im Temperaturbereich von 130°C bis 250°C durchgeführt. Die geeignete Vernetzungstemperatur kann vom Fachmann auf Basis des jeweils eingesetzten Silans einfach ermittelt werden.

**Gegenstand der Erfindung** ist ferner die Verwendung der erfindungsgemäßen vulkanisierbaren Zusammensetzungen zur Herstellung von Artikeln mit gummielastomeren Eigenschaften. Bei diesen Artikeln handelt es sich beispielsweise um Formartikel, Kabel, Schläuche, Extrusions- oder Kalandrierartikel.

Die Herstellung solcher Artikel mit gummielastomeren Eigenschaften erfolgt durch ein typisches Formgebungsverfahren.

Sie erfolgt beispielsweise, indem man die wie oben beschrieben durch Mischen hergestellten erfindungsgemäßen Zusammensetzungen einem Compression moulding, einem Compression Transfer Moulding, einem Spritzguss- oder Extrusionsverfahren oder einer Kalandrierung unterwirft.

Ferner ist es auch möglich, die Komponenten der erfindungsgemäßen Zusammensetzung in einem der oben genannten Mischaggregate bei einer Temperatur zu mischen, die bereits zu einer ersten Transesterifizierung führt, und dann dem Formgebungsverfahren zuzuführen.

Die Vernetzung der speziellen Ethylen-Vinylacetat-Copolymere mit hohem Vinylacetat-Gehalt gelingt durch Transesterifizierung unter Einsatz von Silanen oder Titanaten als Vernetzern anstatt wie bisher in der Fachwelt bekannt mit Peroxiden. Dadurch wird erstmals der Einsatz von Alterungsschutzmitteln, die als Radikalfänger zu betrachten sind, für Ethylen-Vinylacetat-Copolymere mit dem höheren Vinylacetat-Gehalt möglich. Beispiele hierfür sind Paraphenylendiamine (auch als "PPD" bezeichnet) sowie sterisch gehinderte Phenole. Weiterhin können in der erfindungsgemäßen vulkanisierbaren Zusammensetzung erstmals Weichmacher eingesetzt werden, die üblicherweise mit der bisher durchgeführten Peroxidvernetzung interferieren, wie z.B. hocharomatische Weichmacher oder Polyetherester Weichmacher. Dadurch wird es erstmals möglich, die Tieftemperaturflexibilität von Ethylen-Vinylacetat-Copolymeren mit höheren Vinylacetat-Gehalten gezielt einzustellen.

### Beispiele 1-26:

Die Basisrezeptur der vulkanisierbaren Zusammensetzungen gemäß den Beispielen 1-26 enthielt:

| | |
|---|---|
| Levapren® 600HV(R) | 100 phr |
| Vernetzer/Funktionalisierungsagens | 10 phr |
| Zinn-organischer Katalysator | 1 phr |

| | |
|---|---|
| (phr = parts per hundred parts of rubber, d.h. Gewichts-Teile pro 100 Gewichtsteile rubber, d.h. Levapren® 600 HV(R)) | |

Für alle Beispiele wurde als zinnorganischer Katalysator Dibutylzinnoxid (DBTO) verwendet.

Als Vernetzer/Funktionalisierungsagens wurden die Silane eingesetzt, die in Tabelle 1 mit chemischem Namen sowie Handelsnamen aufgeführt sind. Diese sind käuflich erhältlich.

Die drei Komponenten wurden auf einer Laborwalze gemischt und sorgfältig homogenisiert, um die erfindungsgemäße vulkanisierbare Zusammensetzung in Form eines Walzenfells zu erhalten.

Jeweils eine Probe dieses Walzenfells wurde in dem Moving Die Rheometer MDR 2000 des Unternehmens Alpha Technologies bezüglich ihres Vulkanisationsverhaltens charakterisiert.

Die Messzeit betrug hierbei 20 min, die Frequenz 1,66 Hz, der Ozillationswinkel 0,5°. Als Messtemperatur wurde 210°C gewählt. Als Maß für die Netzstellendichte dient die Größe (S'ₘₐₓ-S'ₘᵢₙ) (Maximalwert des viskosen Anteils des Drehmoments - Minimalwert des viskosen Anteils des Drehmoments). Hieraus ist ein Rückschluss auf die Vernetzungseffizienz der Silane bzw. auf die Pfropfung der Silane auf die Ethylen-Vinylacetat Copolymere möglich.

Aus den in Tabelle 1 zusammengestellten, unterschiedlichen Werten für die Größe (S'ₘₐₓ-S'ₘᵢₙ) ist zu erkennen, dass unter den gegebenen Bedingungen bei Verwendung mancher Silane eine hohe Vernetzungseffizienz erzielt wird, während bei anderen Silanen zunächst eine Pfropfung auf die Polymerketten, aber noch keine ausgeprägte Vernetzung erfolgt.

### Beschreibung des Moving Die Rheometer MDR 2000:

Das MDR 2000 dient zur Bestimmung des Vulkanisationsverhaltens, insbesondere der Vulkanisationsgeschwindigkeit von Gummimischungen. Die Prüfkammer ist ein geschlossenes System. Beide Prüfkammernhälften sind bikonisch, d. h. die Prüfkammer wird durch zwei flache gegeneinander gerichtete Kegelstümpfe gebildet. Durch diese Formgebung ergibt sich ein vom Radius unabhängiger gleicher Scherwinkel in der Probe.

Entsprechend der rotationssymmetrischen Form der Reaktionskammer führt die untere Kammerhälfte eine oszillierende Drehbewegung mit variabler Winkel-Amplitude aus, so dass in der Probe eine gleichmäßige Spannungsverteilung vorliegt. Der Antrieb erfolgt über einen direkt an der Antriebswelle der unteren Prüfkammer angebrachten Servoantrieb. Dieser wird über eine Steuerungselektronik geregelt. Die Oszillationswinkel-Amplitude ist in Stufen von 0,2°, 0,5°, 1,0° und 3,0° einstellbar. Die Frequenz beträgt 1,66 Hz.

Beim Schließen der Prüfkammer wird die obere Prüfkammerhälfte auf die untere Prüfkammerhälfte aufgesetzt. Somit ist die Reaktionskammer vollkommen geschlossen und die Probe steht während der Messung bez. der Vulkanisation immer unter Druck.

Die Temperaturregelung (40-225°C) der beiden elektrisch beheizten Prüfkammerhälften erfolgt über die Software mit je einem getrennten Regelkreis. Die Temperaturreglung und TemperaturMessung erfolgen mittels PT 100 Widerstandthermometern.

Die Prüfzeit kann vorgegeben werden.

Die Drehmomentmessung erfolgt über einen DMS Drehmomentaufnehmer, der mit der oberen Hälfte der Prüfkammer verbunden ist.

Über das zeitabhängige, gemessene Drehmoment und die Phasenverschiebung zur mechanischen Belastung durch die oszillierende untere Kammer, ist es möglich, den viskosen und elastischen Anteil (S' und S") der Drehmoments, das durch die Mischung ausgeübt wird, zu ermitteln. Die ermittelten Messwerte wie Drehmoment, viskoser und elastischer Anteil sowie die Temperatur der oberen und unteren Prüfkammer werden gespeichert und als Funktion der Messzeit auf dem Bildschirm dargestellt.

**Tabelle 1: Eingesetzte Silane**

| **Beispiel** | **Silan/Chemischer Name** | **Abkürzung/ Handelsname** | **S'max-S'min** |
|---|---|---|---|
| 1 | Tetramethylorthosilan | TMOS | 11,2 |
| 2 | Tetraethylorthosilan | TEOS | 18,0 |
| 3 | Tetrapropylorthosilan | TPOS | 17,8 |
| 4 | Tetrabutylorthosilan | TBOS | 12,3 |
| 5 | Trimethoxymethylsilan | TMMS | 1,3 |
| 6 | Trimethoxypropylsilan | TMPS | 3,3 |
| 7 | Vinyltrimethoxysilan | VTMO | 0,2 |
| 8 | Poly(vinyltrimethoxysilan) | VTMO hydrolysiert | 5,2 |
| 9 | Hexadecyltrimethoxysilan | VP Si 116 | 1,2 |
| 10 | (3-Methacryloxypropyl)trimethoxysilan | MEMO | 4,2 |
| 11 | Tris(2-methoxyethoxy)vinylsilan | VTMOEO | 1,9 |
| 12 | Triethoxypropylsilan | Si® 203 | 15,4 |
| 13 | Triethoxyoctylsilan | VP Si 208 | 10,8 |
| 14 | Triethoxyhexadecylsilan | VP Si 216 | 6,7 |
| 15 | Triethoxyvinylsilan | VP Si 225 | 11,9 |
| 16 | 3-Aminopropyltriethoxysilan | AMEO | 10,8 |
| 17 | Ethylenbis(triethoxysilan) | Silquest® Y 9805 | 10,7 |
| 18 | 1,8-Bis(triethoxysilyl)octan | SIB 1824 | 13,9 |
| 19 | Bis(trimethoxysilylpropyl)amin | Silquest® 1170 | 7,1 |
| 20 | Bis(trimethoxysilylpropyl)ethylendiamin | XS 951 | 5,8 |
| 21 | Diethoxymethylphenylsilan | SiSiB PC8612 | 1,6 |
| 22 | Polydiethoxysiloxan | PSI-021 | 5,7 |
| 23 | Bis(methyldiethoxysilylpropyl)amin | SIB 1620 | 5,8 |
| 24 | Chloromethylmethyldiethoxysilan | SIC2292.0 | 0,7 |
| 25 | N-Cyclohexylaminomethylmethyldiethoxysilan | Geniosil® XL 924 | 8,2 |
| 26 | 3-(Trimethoxysilyl)propylethylendiamin | Silquest® A1120 | 2,1 |

### Beispiel 27:

Die Rezeptur der vulkanisierbaren Zusammensetzungen für Beispiel 27 enthielt:

| | |
|---|---|
| Levapren® 600HV (R) | 100 phr |
| Hexadecyltrimethoxysilan | 10 phr |
| DBTO | 1 phr |

| | |
|---|---|
| (phr = parts per hundred parts of rubber, d.h. Gewichts-Teile pro 100 Gewichtsteile rubber, d.h. Levapren® 600 HV(R)) | |

Aus den oben genannten drei Komponenten wurde auf einer Laborwalze eine Mischung hergestellt und für 30 Minuten bei 210°C geheizt.

Eine Messung an dieser Mischung nach dem Heizvorgang im Moving Die Rheometer ergab für (S'max-S'min) einen Wert von 1,2. Dies bedeutet, dass noch keine substanzielle Vernetzung eingetreten ist, die nachfolgend beschriebenen DSC Messungen zeigen jedoch, dass Silan über eine erste Transesterifizierung an die Copolymer Ketten des Levaprens gebunden wurde.

Hierzu wurden an der für 30 min auf 210°C geheizten Mischung DSC Messungen durchgeführt. Gegenüber der ursprünglichen Mischung vor dem Heizvorgang wurde eine um ca. 4-5 Grad reduzierte Glassübergangstemperatur (Tg) gefunden. Dies ist als "Weichmachereffekt" des Silans zu verstehen. Zusätzlich wurde ein Schmelz-Peak bei ca. 40°C gemessen, der auf kristalline Ethylenstrukturen der Hexadecylkette des eingesetzten Silans zurückzuführen ist.

Anschließend wurde die Mischung mit Methanol extrahiert, wodurch alle freien, nicht an das Ethylen-Vinylacetat Copolymer gebundenen Substanzen entfernt wurden. Die nach der Extraktion verbleibende Mischung wurde erneut per DSC vermessen. Es wurde gefunden, dass sich die Glasübergangstemperatur Tg wieder etwa auf dem Wert von reinem Levapren® 600H V verändert hat. Erhalten blieb jedoch ein Schmelz-Peak bei ca. 40°C, der auf kristalline Ethylenstrukturen der Hexadecylkette des eingesetzten Silans zurückzuführen ist. Dies bedeutet, dass ein Teil des Silans durch die Transesterifizierung kovalent an das Copolymer gebunden wurde.

### Beispiel 28:

Die Rezeptur der vulkanisierbaren Zusammensetzungen für Beispiel 28 enthielt:

| | |
|---|---|
| Levapren® 600HV (R) | 100 phr |
| KR 44 * | 10 phr |
| DBTO | 1 phr |

| | |
|---|---|
| (phr = parts per hundred parts of rubber, d.h. Gewichts-Teile pro 100 Gewichtsteile rubber, d.h. Levapren® 600 HV(R)) * Bei KR 44 handelt es sich um Isopropyl-tris(N-aminoethyl-aminoethyl)titanat der folgenden Struktur : 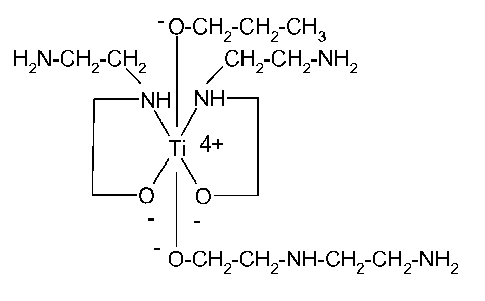 | |

Aus den oben genannten drei Komponenten wurde auf einer Laborwalze eine Mischung hergestellt und diese für 30 Minuten bei 210°C geheizt. Die geheizte Mischung wurde anschließend mit Methanol extrahiert, um alle nicht an das Copolymer gebundenen Substanzen zu entfernen, und einer quantitativen Elementaranalyse mittels ICP-AES (Induktiv gekoppelte Plasma-Atom Emissions Spektroskopie) unterzogen, um nachzuweisen, dass eine Aufpropfung des Titanats an das Levapren Copolymer durch Transesterifizierung stattgefunden hat. 1,3 Gew.% Titan, bezogen auf die gesamte eingesetzte vulkanisierbare Zusammensetzung, sind durch Transesterifizierung an das Levapren Copolymer gebunden worden.

## Patentansprüche

1. Vulkanisierbare Zusammensetzung enthaltend
a) mindestens ein Copolymer auf Basis der Monomere Ethylen und Vinylacetat mit einem Vinylacetat-Gehalt von mindestens 45 Gew.%, bezogen auf das Copolymer,
b) mindestens einen zinnorganischen Katalysator und
c) mindestens einen Vernetzer ausgewählt aus der Gruppe bestehend aus Silanen und Titanaten.

2. Vulkanisierbare Zusammensetzung gemäß Anspruch 1 enthaltend mindestens ein Copolymer auf Basis der Monomere Ethylen und Vinylacetat mit einem Vinyacetat-Gehalt im Bereich von 45 bis 93 Gew.%, bevorzugt im Bereich von 45 bis 90 Gew.%, besonders bevorzugt im Bereich von 45 bis 85 Gew.% und insbesondere im Bereich von 50 bis 80 Gew.%, jeweils bezogen auf das Copolymer, aufweisen.

3. Vulkanisierbare Zusammensetzung gemäß Anspruch 1 oder 2 enthaltend mindestens einen zinnorganischen Katalysator aus der Gruppe umfassend Monoalkylzinn-Verbindungen, Dialkylzinn-Verbindungen, Trialkylzinn-Verbindungen, Triarylzinn-Verbindungen, Tetraalkylzinn-Verbindungen un d Zinn(II) Salze von Carbonsäuren, soweit diese Salze nicht unter eine der vorgenannten Verbindungen fallen.

4. Vulkanisierbare Zusammensetzung gemäß einem oder mehreren der Ansprüche 1-3, wobei mindestens ein Silan der allgemeinen Formel (I) eingesetzt wird, 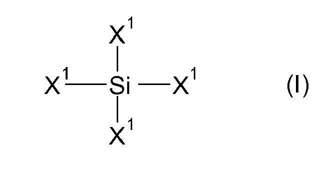 worin
X¹ gleich oder verschieden sind und für eine Gruppe der Formel O-(R¹-O)ₘ-R² stehen, worin m eine ganze Zahl von 0 bis 20 ist, R¹ einen C₁-C₂₀-Alkylenrest, bevorzugt einen C₁-C₈-Alkylenrest darstellt und R² für einen geradkettigen oder verzweigten C₁-C₂₀-, bevorzugt einen geradkettigen oder verzweigten C₁-C₈-Alkylrest steht.

5. Vulkanisierbare Zusammensetzung gemäß einem oder mehreren der Ansprüche 1-4, wobei mindestens ein Silan ausgewählt aus der Gruppe Tetramethoxysilan, Tetraethoxysilan, Tetra-n-propoxysilan, Tetra-n-butoxysilan und Tetrakis(2-butoxyethoxy)silan eingesetzt wird.

6. Vulkanisierbare Zusammensetzung gemäß einem oder mehreren der Ansprüche 1-3, wobei mindestens ein Silan der allgemeinen Formel (II) eingesetzt wird, 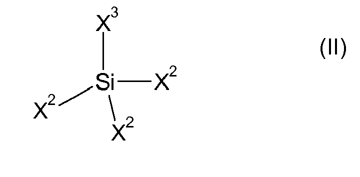 worin
X² gleich oder verschieden sind und
einen geradkettigen oder verzweigten C₁-C₂₀-, bevorzugt C₁-C₈-, besonders bevorzugt C₁-C₅-Alkylrest,
einen C₆-C₁₄-Arylrest, oder
eine Gruppe der Formel O-(R1-O)ₘR² darstellen, worin
m eine ganze Zahl von 0 bis 20 ist,
R¹ einen C₁-C₂₀-, bevorzugt C₁-C₈-, besonders bevorzugt C₁-C₅-Alkylenrest und
R² einen geradkettigen oder verzweigten C₁-C₂₀-, bevorzugt C₁-C₈-, besonders bevorzugt C₁-C₅-Alkylrest darstellt,
wobei mindestens ein Rest X² für eine Gruppe der vorgenannten Formel O-(R¹-O)ₘR² steht,
X³ einen Rest -(CH₂)ₙ-R³bedeutet, worin
n eine ganze Zahl von 0 bis 16, bevorzugt von 0 bis 8, besonders bevorzugt 0, 1, 2 oder 3 ist, wobei die Methylengruppen CH₂ der Alkylenkette (CH₂)ₙ auch durch einen gegebenenfalls substituierten aromatischen Rest, bevorzugt Phenyl unterbrochen sein können, und
R³ Wasserstoff, einen geradkettigen oder verzweigten C₁-C₂₀-, bevorzugt C₁-C₈-, besonders bevorzugt C₁-C₅-Alkylrest, OH, Halogen, bevorzugt Fluor, Chlor, Brom oder Iod, NR ⁴₂, wobei R⁴ gleich oder verschieden sind und für Wasserstoff, geradkettiges oder verzweigtes C₁-C₂₀-, bevorzugt C₁-C₈-, besonders bevorzugt C₁-C₅-Alkyl, C₃-C₈-Cycloalkyl, bevorzugt Cyclohexyl, oder einen C₆-C₂₄-, bevorzugt C₆-C₁₄-Arylrest steht, -NHCH₂CH₂NH₂, -SH, -NCO, Carbamat, Acrylat, Vinyl (-CH=CH₂), Methacrylat, Glycidoxy, COOR⁴, P(R⁴)₃, wobei R⁴ gleich oder verschieden sind und die bereits genannten Bedeutungen besitzen kann,
oder R³ einen Rest der allgemeinen Formel (III) darstellt, 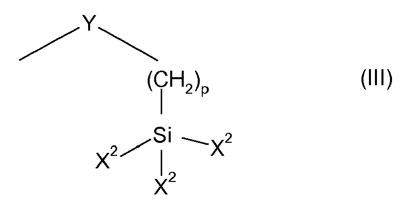 worin
x² den Bedeutungsumfang hat wie in der allgemeinen Formel (II)
p den Bedeutungsumfang von n in der allgemeinen Formel (II) hat und
Y für NR⁵ steht, wobei R⁵ Wasserstoff oder einen geradkettigen oder verzweigten C₁-C₂₀-, bevorzugt C₁-C₈-, besonders bevorzugt C₁-C₅-Alkylrest darstellt, oder für C(R⁵)₂ steht, wobei R⁵ gleich oder verschieden ist und die zuvor genannten Bedeutungen besitzen kann,
oder
X³ für einen Rest -NR⁵-(CH₂)ᵣ₋NR⁵-R⁶ steht, wobei R⁵ die gleichen Bedeutungen besitzen kann wie zuvor für Formel (III) genannt, r eine Zahl von 1 bis 10, bevorzugt 2 bis 8 ist und R⁶ den Rest -Si(X²)₃ darstellt, wobei X² gleich oder verschieden sind und die zuvor für Formel (II) genannten Bedeutungen besitzen können.

7. Vulkanisierbare Zusammensetzung gemäß Anspruch 6, wobei mindestens ein Silan der allgemeinen Formel (II) eingesetzt wird, wobei
X² gleich oder verschieden sind und für eine Gruppe der Formel O-(R¹-O)ₘ-R² stehen, worin
m eine ganze Zahl von 0 bis 20, bevorzugt 0 bis 10 ist,
R¹ einen C₁-C₂₀-, bevorzugt C₁-C₈-, besonders bevorzugt C₁-C₅-Alkylenrest und
R² einen geradkettigen oder verzweigten C₁-C₂₀-, bevorzugt C₁-C₈-,
besonders bevorzugt C₁-C₅-Alkylrest darstellt, und
X³ einen Rest -(CH₂)ₙ-R³ bedeutet, worin
n eine ganze Zahl von 0 bis 16, bevorzugt von 0 bis 8, besonders bevorzugt 0, 1, 2 oder 3 ist, wobei die Methylengruppen CH₂ der Alkylenkette (CH₂)ₙ auch durch einen gegebenenfalls substituierten aromatischen Rest, bevorzugt Phenyl unterbrochen sein können, und
R³ Wasserstoff, einen geradkettigen oder verzweigten C₁-C₂₀-, bevorzugt C₁-C₈-, besonders bevorzugt C₁-C₅-Alkylrest, OH, Halogen, bevorzugt Fluor, Chlor, Brom oder Iod, NR⁴₂ wobei R⁴ gleich oder verschieden sind und für Wasserstoff, geradkettiges oder verzweigtes C₁-C₂₀-, bevorzugt C₁-C₈-, besonders bevorzugt C₁-C₅-Alkyl, C ₃-C₈-Cycloalkyl, bevorzugt Cyclohexyl, oder einen C₆-C₂₄-, bevorzugt C₆-C₁₄-Arylrest steht, -NHCH₂CH₂NH₂, -SH, -NCO, Carbamat, Acrylat, Vinyl (-CH=CH₂), Methacrylat, Glycidoxy, COOR⁴, P(R⁴)₃, wobei R⁴ gleich oder verschieden sind und die bereits genannten Bedeutungen besitzen kann.

8. Vulkanisierbare Zusammensetzung gemäß Anspruch 6, wobei mindestens ein Silan der allgemeinen Formel (II) eingesetzt wird, wobei
X² gleich oder verschieden sind und
einen geradkettigen oder verzweigten C₁-C₂₀-, bevorzugt C₁-C₈-, besonders bevorzugt C₁-C₅-Alkylrest,
einen C₆-C₁₄-Arylrest, oder
eine Gruppe der Formel O-(R¹-O)ₘ-R² darstellen, worin
m eine ganze Zahl von 0 bis 20 ist,
R¹ einen C₁-C₂₀-, bevorzugt C₁-C₈-, besonders bevorzugt C₁-C₅-Alkylenrest und
R² einen geradkettigen oder verzweigten C₁-C₂₀-, bevorzugt C₁-C₈-,
besonders bevorzugt C₁-C₅-Alkylrest darstellt,
wobei mindestens ein Rest X² für eine Gruppe der Formel O-(R¹-O)ₘ-R² steht, und
X³ einen Rest -(CH₂)ₙ-R³ bedeutet, worin
n eine ganze Zahl von 0 bis 16, bevorzugt von 0 bis 8, besonders bevorzugt 0, 1, 2 oder 3 ist, wobei die Methylengruppen CH₂ der Alkylenkette (CH₂)ₙ auch durch einen gegebenenfalls substituierten aromatischen Rest, bevorzugt Phenyl unterbrochen sein können, und
R³ für eine Gruppe der allgemeinen Formel (III) steht, 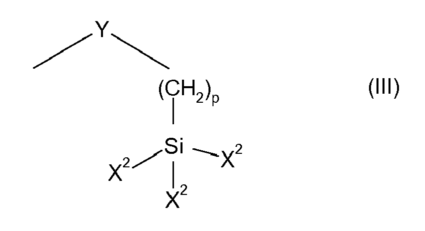
worin
X² den Bedeutungsumfang hat wie in der allgemeinen Formel (II)
p den Bedeutungsumfang von n in der allgemeinen Formel (II) hat und
Y für NR⁵ steht, wobei R⁵ Wasserstoff oder einen geradkettigen oder verzweigten C₁-C₂₀-, bevorzugt C₁-C₈-, besonders bevorzugt C₁-C₅-Alkylrest darstellt, oder für C(R⁵)₂ steht, wobei R⁵ gleich oder verschieden ist und die zuvor genannten Bedeutungen besitzen kann.

9. Vulkanisierbare Zusammensetzung gemäß Anspruch 6, wobei mindestens ein Silan der allgemeinen Formel (II) eingesetzt wird ausgewählt aus der Gruppe bestehend aus Diethoxydimethylsilan, Trimethoxymethylsilan, Trimethoxy-n-propylsilan, n-Hexadecyltrimethoxysilan, Triethoxy-n-propylsilan, Triethoxy-n-octylsilan, Triethoxy-n-hexadecylsilan, Trimethoxyvinylsilan, Triethoxyvinylsilan, (3-Methacryloxypropyl) trimethoxysilan ((CH₃O)₃Si((CH₂)₃-O-C(=O)-C(CH₃)=CH₂), Tris(2-methoxyethoxy) vinylsilan, 3-Aminopropyltriethoxysilan, Ethylen-bis(tri-ethoxysilan), 1,8-Bis(triethoxysilyl)octan, Bis(trimethoxysilylpropyl)amin, Bis(tri-methoxysilylpropyl)ethylen-diamin, Diethoxymethylphenylsilan, Bis(methyldiethoxy-silylpropyl)amin, Chloromethylmethyldiethoxysilan, N-Cyclohexylaminomethyl-methyldiethoxysilan und 3-(Trimethoxysilyl) propylethylendiamin.

10. Vulkanisierbare Zusammensetzung gemäß einem oder mehreren der Ansprüche 1 bis 3, wobei mindestens ein Titanat der allgemeinen Formel (V) eingesetzt wird,
(X⁴O)ₛ-Ti-(OX⁵)₄₋ₛ (V)
wobei
s 0,1,2, 3 oder 4 ist,
X⁴ gleich oder verschieden sind und einen geradkettigen oder verzweigten C₁-C₂₀-, bevorzugt C₁-C₈-, besonders bevorzugt C₁-C₅-Alkylrest darstellen, insbesondere Ethyl, Propyl oder Butyl, und
X⁵ gleich oder verschieden sind und eine organofunktionelle Gruppe darstellen, bevorzugt Phosphat, Benzolsulfonat, Phenolat, Amino, Carboxy, Ester oder Salze davon.

11. Vulkanisierbare Zusammensetzung gemäß einem oder mehreren der Ansprüche 1 bis 3, wobei mindestens ein Titanat ausgewählt aus der Gruppe bestehend aus Tetra(ethyl)titanat, Tetra(n-propyl)titanat, Tetra(isopropyl)titanat, Tetra-(n-butyl)titanat, Tetra(n-butyl,iso-propyl)titanat, Tetra(iso-butyl)titanat, Tetra(tert.butyl)titanat, Tetra(isooctyl)titanat, Titan(IV)2-ethylhexoxid und Isopropyl tris(N-aminoethylaminoethyl)titanat eingesetzt wird.

12. Vulkanisierbare Zusammensetzung gemäß einem oder mehreren der Ansprüche 1 bis 11, wobei der Vernetzer in einer Menge von 0,1 bis 25 Gewichtsteilen, bevorzugt in einer Menge von 0,5 bis 15 Gewichtsteilen und besonders bevorzugt in einer Menge von 1 bis 10 Gewichtsteilen eingesetzt wird, bezogen auf 100 Gewichtsteile des Copolymers auf Basis der Monomere Ethylen und Vinylacetat.

13. Vulkanisierbare Zusammensetzung gemäß einem oder mehreren der Ansprüche 1 bis 12, wobei der zinnorganische Katalysator in einer Menge von 0,01 bis 5 Gewichtsteilen, bevorzugt in einer Menge von 0,1 bis 3 Gewichtsteilen und besonders bevorzugt in einer Menge von 0,3 bis 1,5 Gewichtsteilen eingesetzt wird, bezogen auf 100 Gewichtsteile des Copolymers auf Basis der Monomere Ethylen und Vinylacetat.

14. Verfahren zur Herstellung der vulkanisierbaren Zusammensetzung gemäß einem oder mehreren der Ansprüche 1 bis 13, indem man mindestens ein Copolymer auf Basis der Monomere Ethylen und Vinylacetat mit einem Vinylacetat Gehalt von mindestens 45 Gew.%, bezogen auf das Copolymer, mindestens einen zinnorganischen Katalysator und mindestens einen Vernetzer ausgewählt aus der Gruppe bestehend aus Silanen und Titanaten miteinander vermischt, wobei die Mischtemperatur so gewählt wird, dass noch keine Vernetzung der Ethylen-Vinylacetat-Copolymere während dieses Mischvorgangs eintritt.

15. Verwendung der vulkanisierbaren Zusammensetzungen gemäß einem oder mehreren der Ansprüche 1 bis 13 zur Herstellung von Artikeln mit gummielastomeren Eigenschaften, bevorzugt von Formartikeln, Kabeln, Schläuchen, Extrusions- oder Kalandrierartikeln.

16. Verwendung gemäß Anspruch 15, indem man die vulkanisierbaren Zusammensetzungen einem Compression moulding, einem Compression Transfer Moulding, einem Spritzguss- oder Extrusionsverfahren oder einer Kalandrierung unterwirft.
